(19) Europäisches Patentamt
European Patent Office
Office européen des brevets

(11) Publication number: 0 094 679
B1

(12) **EUROPEAN PATENT SPECIFICATION**

(45) Date of publication of patent specification: 26.11.86

(51) Int. Cl.$^4$: B 01 D 13/04, C 08 J 5/04, C 08 J 5/22

(21) Application number: 83104863.2

(22) Date of filing: 17.05.83

(54) **Process for producing an ion exchange membrane.**

(30) Priority: 18.05.82 JP 82387/82

(43) Date of publication of application:
23.11.83 Bulletin 83/47

(45) Publication of the grant of the patent:
26.11.86 Bulletin 86/48

(84) Designated Contracting States:
DE FR GB IT NL

(56) References cited:
EP-A-0 086 595
EP-A-0 086 596
DE-A-2 430 956
DE-A-2 739 705
DE-A-2 740 759
DE-A-2 803 198
DE-A-2 822 493
DE-A-2 921 367
US-A-4 153 661

(73) Proprietor: ASAHI GLASS COMPANY LTD.
No. 1-2, Marunouchi 2-chome
Chiyoda-ku, Tokyo (JP)

(72) Inventor: Ito, Hiroaki
535-5-301, Ohmamedo-cho Kohhoku-ku
Yokohama-shi Kanagawa-ken (JP)
Inventor: Ono, Haruyasu
2-13-4, Shiroganedai Minato-ku
Tokyo (JP)

(74) Representative: Wächtershäuser, Günter, Dr.
Tal 29
D-8000 München 2 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 094 679 B1

**Description**

The present invention relates to a process for producing an ion exchange membrane by stretching treatment. More particularly, it relates to a process for producing an ion exchange membrane by specific stretching treatment of a film of a fluorinated resin containing fluoropolymer fibrils.

A fluorinated ion exchange membrane made of a thermoplastic fluoropolymer having functional groups such as sulfonic acid groups or carboxylic acid groups (hereinafter sometimes referred to simply as a "fluorinated ion exchange membrane") has recently been found useful for e.g. a diaphgram for electrolysis of an alkali metal salt, as an ion exchange membrane having excellent oxidization resistance, alkaline resistance and heat resistance. In many cases, such a fluorinated ion exchange membrane is somehow reinforced by means of various reinforcing materials which are called supporting substrates or core materials, to provide adquate mechanical strength or dimensional stability to the membrane.

As such a reinforcing method, it is commonly known to laminate and unify the fluorinated ion exchange membrane with a woven fabric or net of e.g. polytetrafluoroethylene (hereinafter sometimes referred to simply as "PTFE") as a reinforcing material (see for example EP—A1—86 595 and EP—A1—56 596, both claiming a priority of February 17, 1982, and both published on August 24, 1983). However, this method brings about drawbacks such that the reinforcing material will be non-uniformly maldistributed in the resin matrix of the fluorinated ion exchange membrane and the membrane resistance will unavoidably be high due to the presence of the PTFE fabric.

As an alternative method, there has been proposed a method in which fine powder of PTFE is dispersed in a fluorinated ion exchange resin and the mixture is then forcibly kneaded by a kneader such as a roll mill, an extruder or a Banbury's mixer to fibrillate the fine powder of PTFE, so that the fluorinated ion exchange membrane will be reinforced by fibrils thereby formed (DE—A—2 822 493).

By such a method of reinforcement with fibrils, it is possible to uniformly distribute the fibrils as reinforcing material in the resin matrix of the fluorinated ion exchange membrane. The fibrils will be intertwined one another to form a three dimensional network structure in the resin matrix to provide improved reinforcing effectiveness, and thus intimate unification of the fibrils and the resin matrix will be established.

On the other hand, in the case of a fluorinated ion exchange membrane, it is generally true that the greater tha amount of the incorporated reinforcing material, the better or the more advantageous from the viewpoint of the membrane strength, and the thinner the membrane, the better or the more advantageous from the viewpoint of the membrane resistance.

However, in the reinforcement with PTFE fibrils, the melt viscosity of the resin increases or the rubbery characteristic becomes pronounced by the incorporation of the fibrils, whereby roughness appear on the surface of the membrane fabricated by extrusion. Thus, the fibril-incorporated resin is inferior in the extrusion moldability, and there is a limitation in the fabricability into a membrane even when the extrusion-molding die, etc. are properly selected. Namely, the fibril-incorporated resin has difficulties in the fabricability into a membrane. Especially when the amount of the fibrils is increased to improve the mechanical strength or the dimensional stability, the fabricability into a membrane tends to be poorer, and such difficulties tend to increase also when the width of the die is increased or the amount of extrusion is increased in an attempt to increase the production rate.

The present inventors have conducted extensive researches and studies on the fabrication of a membrane from a film of a fluorinated ion exchange membrane in which PTFE fibrils are incorporated, and, as a result, have found the following extremely interesting phenomenon. Namely, from an investigation on the tensile breaking elongation of a fibril-containing film, it has been found that such tensile elongation has a characteristic temperature dependency and that the tensile elongation becomes maximum at a temperature far lower than the melt-extrusion molding temperature of the film resin and the maximum value is far greater than the tensile elongation in the vicinity of the melting temperature. Further, when a fibril-containing film is subjected to stretching treatment in a temperature range within which the tensile elongation is great, a fluorinated ion exchange membrane having an extremely thin thickness can efficiently and advantageously be produced. By such specific stretching treatment, it is possible to fabricate a membrane even when the amount of the incorporated fibrils is increased, and it is thereby possible to produce a fluorinated ion exchange membrane having adequate strength and low membrane resistance.

Thus, the present invention has been accomplished on the basis of the above-mentioned discovery. Namely, the present invention provides a novel process for producing an ion exchange membrane comprising a fluorinated ion exchange resin containing uniformly dispersed fluoropolymer fibrils, characterized in that a film of said fluorinated ion exchange resin containing said fluoropolymer fibrils is stretched at a temperature lower by from 50 to 250°C than $T_Q$ of the fluorinated ion exchange resin, where $T_Q$ is a temperature at which the fluorinated ion exchange resin has a volumetric flow rate of 100 $mm^3$/sec under a pressure of 2,94 MPa (30 $kg/cm^2$), when melt-extruding the polymer through a nozzle having a diameter of 1 mm and a length of 2 mm.

Now, the present invention will be described in detail with reference to the preferred embodiments.

In the present invention, the fluorinated ion exchange resin forming a resin matrix of the fluorinated ion exchange membrane is composed of a thermoplastic resin which is, of course, moldable by heat-melt molding. As such a resin, there may be employed a resin composed of a fluoropolymer having ion

exchange functional groups such as carboxylic acid groups, sulfonic acid groups, phosphoric acid groups or phenolic hydroxyl groups. For instance, preferred is a resin having a copolymer structure composed of a fluorinated vinyl monomer such as tetrafluoroethylene or chlorotrifluoroethylene and a fluorovinyl monomer containing an ion exchange group such as a sulfonic acid group, a carboxylic acid group or a phosphoric acid group. A trifluorostyrene polymer to which ion exchange groups such as sulfonic acid groups are introduced, may also be used.

As the fluorinated ion exchange resin, a polymer having the following units (a) and (b) is particularly preferably used:

(a) $\leftarrow\!\!\!\!\!+ CF_2—CXX' +\!\!\!\!\!\rightarrow$,

(b) $+\!\!\!\!\!\leftarrow CF_2—\underset{\displaystyle Y}{\underset{|}{CX}} +\!\!\!\!\!\rightarrow$

where X is fluorine, chlorine, hydrogen or $—CF_3$, X' is X or $CF_3(CF_2)_m$, m is an integer of 1 to 5 and Y is selected from the following groups:

$(CF_2)_xA$, $—O(CF_2)_xA$, $(O—CF_2—\underset{\displaystyle Z}{\underset{|}{CF}})_yA$,

$—CF_2—O(CF_2)_xA$, $(O—CF_2—\underset{\displaystyle Z}{\underset{|}{CF}})_x(O—CF_2—\underset{\displaystyle R_f}{\underset{|}{CF}})_yA$,

$—CF_2(O—CF_2—\underset{\displaystyle Z}{\underset{|}{CF}})_x(O—CF_2—\underset{\displaystyle R_f}{\underset{|}{CF}})_yA$, and

$—O—CF_2(\underset{\displaystyle Z}{\underset{|}{CF}}—O—CF_2)_x(CF_2)_y(CF_2—O—\underset{\displaystyle R_f}{\underset{|}{CF}})_zA$

where each of x, y and z is an integer of 0 to 10, each of Z and $R_f$ is fluorine or a perfluoroalkyl group having from 1 to 10 carbon atoms, A is $—SO_3M$, $—COOM$ or a group which can be converted by hydrolysis to such a group, such as $—SO_2F$, $—CN$, $—COF$ or $—COOR$, M is a hydrogen or an alkali metal, and R is an alkyl group having from 1 to 10 carbon atoms.

In the present invention, the above-mentioned units (a) and (b) may comprise two or more different kinds. Further, it is possible to use a fluorinated ion exchange resin containing, in addition to these units, one or more other components, e.g. an olefin compound such as ethylene, propylene or isobutylene, a fluorovinylether such as $CF_2{=}CFOQ$ (where Q is a perfluoroalkyl group having from 1 to 10 carbon atoms), or a divinyl monomer such as $CF_2{=}CF—CF{=}CF_2$ or $CF_2{=}CFO(CF_2)_{1-4}OCF{=}CF_2$.

The fluorinated ion exchange resin for the present invention preferably has an ion exchange capacity of from 0.5 to 4.0 meq/g dry resin, more preferably from 0.8 to 2.0 meq/g dry resin. In the case of a fluorinated ion exchange resin composed of a copolymer comprising the above-mentioned units (a) and (b), the polymerization units (b) are preferably from 1 to 40 molar%, more preferably from 3 to 30 molar%, so as to give the above-mentioned ion exchange capacity. Further, from the viewpoint of the mechanical strength of the fluorinated ion exchange membrane, it is preferred that the fluorinated ion exchange resin has a molecular weight corresponding to a $T_Q$ value of from 130 to 350°C, preferably from 150 to 280°C, as described hereinafter.

The term "$T_Q$" used in the present specification, is defined as follows. Namely, $T_Q$ is a temperature at which the volumetric flow rate, which is closely associated with the molecular weight of a polymer, is 100 $mm^3$/sec. For the measurement of the volumetric flow rate, the polymer is used in which the ion exchange functional groups in the form of ionized form such as $—COONa$ or $—SO_3Na$ have been converted to a non-ionized form such as $—COOCH_3$ or $—SO_2F$ group. Such a polymer was melt-extruded through a nozzle having a diameter of 1 mm and a length of 2 mm and kept at a predetermined temperature, under pressure of 2,94 MPa (30 $kg/cm^2$), and the amount of the extruded polymer is represented by a unit of $mm^3$/sec.

Further, the "ion exchange capacity" is determined as follows. Namely, an acid-type resin in which the ion exchange functional groups have been converted to a H-type group such as a $—COOH$ group, is left in a 1N HCl at 60°C for 5 hours to completely convert the ion exchange groups to the H-type and then thoroughly washed with water to remove HCl completely. Then, 0.5 g of this acid-type resin is left to stand still in a solution prepared by adding 25 ml of water to 25 ml of 0.1N NaOH, at room temperature for 2 days. Then, after removing the resin, the amount of NaOH in the solution is determined by back titration with 0.1N HCl.

The fluorinated ion exchange membrane of the present invention may not necessarily be made of a single kind of a polymer or may not necessarily have a single kind of ion exchange groups. For instance, two kinds of polymers may be combined to obtain a desired ion exchange capacity, and the membrane may be a fluorinated ion exchange membrane having both weakly acidic ion exchange groups such as carboxylic acid groups and strongly acidic ion exchange groups such as sulfonic acid groups.

In the present invention, fluoropolymer fluids are uniformly dispersed in the above-mentioned fluorinated ion exchange membrane. As such fluoropolymers to be incorporated, various kinds of polymers may be used so long as they are capable of being fibrillated to form a branched or spider web-like three dimensional network structure of fine fibers when a shearing force is exerted on them. As a suitable specific example, PTFE may be mentioned. Such PTFE may be so-called fine powder obtained by emulsion polymerization or so-called molding powder obtained by suspension polymerization. Particularly preferred are PTFE particles having a surface area of from 3 to 30 $m^2/g$, preferably from 6 to 20 $m^2/g$. The particles preferably have a primary particle size of at most 5 μm, more preferably from 3 to 0.03 μm, and a secondary particle size of at most 5 mm, more preferably at most 3 mm. As such PTFE particles, there may be used a powder obtained by low temperature pulverization of molding powder obtained by suspension polymerization. However, particularly preferred is fine powder obtained by emulsion polymerization as the fine powder quite well satisfies the above-mentioned properties. Such an emulsion polymer is obtainable by polymerizing tetrafluoroethylene in an aqueous medium in accordance with a conventional means. In the present invention, the emulsion polymer may, of course, be used in the form of an aqueous emulsion or in the form of fine powder obtained by subjecting such an aqueous emulsion to flocculation treatment.

The above-mentioned PTFE may be a copolymer of tetrafluoroethylene with a small amount of a modifier monomer such as the above-mentioned ion exchange group-containing fluorovinyl polymer, $CF_2{=}CFCF_3$, $CF_2{=}CFOQ$ (where Q is a perfluoroalkyl group having from 1 to 10 carbon atoms) or $CF_2{=}CFCl$. The molecular weight of the PTFE is not critical, but is preferably at least 1,000,000 from the viewpoint of the reinforcing effectiveness.

In the present invention, the amount of the fluoropolymer fibrils to be incorporated may be varied within a wide range. However, it is usually preferably selected from a range of from 0.2 to 20% by weight, more preferably from 0.5 to 10% by weight, based on the total amount of the resin matrix constituting the above-mentioned fluorinated ion exchange membrane and the fibrils. If the amount of the fibrils is too small, no adequate improvement in the mechanical strength or dimensional stability can be expected. On the other hand, if the amount is excessive, there will be drawbacks such as a decrease in the fabricability into a membrane or an increase in the membrane resistance.

Various means may be employed as a method for uniformly dispersing the fibrils into the fluorinated ion exchange resin matrix. However, from the viewpoints of the operability, the economy and the properties of the fluorinated ion exchange membrane produced, it is preferred to mix a non-fibrillated polymer with a matrix resin and to fibillate the mixture by exerting a shearing force at the time of the mixing or after the mixing. To fibrillation can effectively and advantageously be conducted by kneading the fluorinated ion exchange resin incorporated with e.g. PTFE particles preferably by means of a roll mill to impart a shearing force to the PTFE particles. For the fibrillation, there may be employed various means commonly used for the mixing or kneading of plastics, such as kneading between a pair of rolls, kneading by means of a Banbury's mixer or kneading by means of a single screw or twin screw extruder. The temperature for the kneading is preferably at least 50°C, more preferably at least 80°C and not higher than the melting point of the fluoropolymer to be fibrillated (hereinafter sometimes referred to simply as a "fibril polymer"). The kneading time is not critical, but it is usually preferably from 10 seconds to 1 hour.

The mixing of the fibril polymer and the matrix resin may be conducted in the same time as the fibrillation. Otherwise, it is possible that they are preliminarily mixed by dry mixing or wet mixing and the mixture is then put on a pair of rolls and subjected to shearing and kneading for fibrillation.

According to the present invention, the fluorinated ion exchange resin thus incorporated with fibrils is then fabricated into a membrane by various means. The following three methods may be mentioned as typical examples.

1) The fibril polymer and the matrix resin are mixed, and the fibrillation and the fabrication into a membrane are simultaneously conducted e.g. by means of an extruder as a calender molding machine.

2) The mixing and the fibrillation are conducted e.g. by means of a roll mill, a Banbury's mixer or an intensive kneading extruder, and then, the matrix resin mixed with the fibrils is fabricated into a membrane by means of an extruder.

3) The mixing, the fibrillation and the fabrication into a membrane are conducted independently. For instance, fine powder or latex of PTFE is fibrillated under high speed stirring. Thereafter, the fibrils thereby obtained are uniformly mixed with a fluorinated ion exchange resin, and the mixture is then formed into a film by extrusion molding or calender molding.

For the fabrication of a membrane, calendaring, T-die extrusion, inflation extrusion or press-molding may be employed. Further, it is possible to fabricate a membrane by a casting method from an organic solution or an organic dispersion of the fluorinated ion exchange resin containing fibrils. However, it is more common to conduct the fabrication by heat-melt molding such as press-molding or extrusion molding. It is of course possible that a mixture of the fibril polymer and the matrix resin is preliminarily

pelletized by heat-melt molding and the pellets thereby obtained are formed into a membrane by extrusion molding or press-molding.

In order to avoid the decomposition of the ion exchange groups of the fluorinated ion exchange resin constituting the fluorinated ion exchange membrane during the above-mentioned heat-melt molding, the ion exchange groups should preferably take a proper form, for instance, an acid-form or an ester-form in the case of carboxylic acid groups or a $—SO_2F$ form in the case of sulfonic acid groups.

In the present invention, the fluorinated ion exchange resin containing the above-mentioned uniformly dispersed fibrils is fabricated into a membrane by heat-melt molding such as press-molding or extrusion molding. The temperature for the extrusion molding can be selected from a wide range taking into consideration of the above-mentioned $T_Q$ value of the fluorinated ion exchange resin, the amount of the incorporated fibrils, etc. The temperature for the extrusion molding is usually selected from a range of from 150 to 320°C, preferably from 180 to 300°C.

The fluorinated ion exchange membrane thus mixed with fibrils, is then subjected to stretching treatment. For the stretching treatment, various conventional methods which are known or commonly employed in the field of various synthetic resin films may be employed without any particular restrictions. Namely, the stretching method may be a batch type or a continuous type and may be employed for uniaxial stretching, simultaneous biaxial stretching or sequential biaxial stretching. In the present invention, it is important that the stretching is conducted at a temperature lower by from 50 to 250°C than the above-mentioned $T_Q$ of the fluorinated ion exchange resin constituting the membrane. Preferably, the temperature for the stretching treatment is lower by from 100 to 200°C than the $T_Q$. If the stretching temperature is too high, the tensile breaking elongation of the membrane tends to be small, whereby it becomes impossible to employ a great elongation rate, thus leading to a difficulty in the fabrication into a membrane by stretching. This is true also in the case where the stretching temperature is too low.

The stretching ratio in the stretching treatment in the present invention may be varied within a wide range depending upon the desired thickness of the membrane, the stretching temperature, the thickness of the starting film material of the fluorinated ion exchange resin or the content of the fibrils. It is a feature of the present invention that a high stretching ratio can be employed and accordingly the efficiency for the fabrication of a membrane is good. For instance, in a preferred embodiment, it is possible to employ a stretching ratio of from 1.2 to 8 times. Generally, the slower the stretching strain speed is, the higher the maximum stretching ratio is obtainable. However, a stretching strain speed at most 500 mm/mm · minute, preferably from 0.02 to 200 mm/mm · minute, is usually employed.

Thus, according to the present invention, it is possible to prepare a fluoropolymer fibril-containing membrane having a thickness of as thin as from 50 to 300 μm, especially from 80 to 250 μm. The process of the present invention is applicable also to the preparation of a laminated membrane or a composite membrane such as a fluorinated ion exchange membrane having a hydrophilic porous layer on its surface.

As mentioned above, the process of the present invention can be conducted in such a manner that after the extrusion molding, the film thereby obtained is cooled to the above-mentioned stretching temperature which is lower than the molding temperature and it is subjected to stretching treatment under such condition. It is also preferable that after the extrusion molding, the film is subjected to a proper press-treatment for flattening, followed by stretching treatment. It is also possible that at the time of the press-treatment for flattening, a plurality of films are heat pressed to form a laminated film, which is then subjected to stretching treatment.

As mentioned above, the stretching treatment is conducted within a temperature range which is substantially lower than the melting point of the polymer defined by $T_Q$. If necessary, it is preferred that after the stretching, the membrane is immediately subjected to annealing treatment under heating. By such annealing treatment, it is possible to remove the residual stress from the stretching membrane and thereby to eliminate the tendency of the membrane to return to the original size. The annealing treatment may be conducted in such a manner that the ion exchange membrane after the stretching is heated with its size fixed, at a temperature higher by from 10 to 250°C, preferably from 20 to 220°C, then the stretching temperature, to remove the residual stress, and then cooled. As a specific heating method, there may be mentioned a method of heating the stretched membrane in a heated air, a method of passing the membrane along the heated roll surface or a method of pressing the membrane between a pair of heated rolls. In a preferred embodiment, the stretched continuous membrane is annealed by passing it along a heated roll and then continuously cooled by passing it along a cooling roll kept at a temperature lower than the stretching temperature.

Further, in many cases, it is common to conduct, at various stages during the processing of the ion exchange membrane, a press-heating operation such as a heat-pressing operation for flattening the membrane, a heat-lamination operation for laminating two or more membranes or a heat-pressing to fix a porous thin layer on a membrane surface. In such a heating operation, the stretched ion exchange membrane can adequately be annealed. This is quite advantageous from the viewpoint of the processing efficiency. For instance, in the case where such a press-heating operation is conducted by means of a flat plate press, the stretched membrane is immediately inserted between e.g. biaxially stretched polyester resin films, and after applying pressure (usually 1,74 MPa (20 $kg/cm^2$)) to set the ion exchange membrane, the temperature is raised to heat the membrane. In the case where the heating operation is conducted by a roll press, the stretching apparatus and the roll press apparatus are connected so that the ion exchange

membrane is continuously stretched by the stretching apparatus and then continuously introduced to the roll press apparatus under a predetermined tension, whereupon a press-heating operation such as flattening, lamination or press-bonding of a porous layer on the membrane surface, can be conducted.

Now, the present invention will be described in further detail with reference to Examples. However, it should be understood that the present invention is by no means restricted by such specific examples.

Example 1

To a copolymer of tetrafluoroethylene and $CF_2{=}CFO(CF_2)_3COOCH_3$ having an ion exchange capacity of 1.5 meq/g and $T_Q$ of 225°C, 2.7% by weight of polytetrafluoroethylene fibrils were added and the mixture was extruded at a molding temperature of 240°C to form a fluorinated ion exchange film (extruded film A) having a thickness of 280 µm. The extruded film A is pressed for flattening by a flat plate press to obtain a flattened film (pressed film A). Each film was stretched in the same direction as the direction of extrusion, by means of a stretching tester to investigate the temperature dependency and the stretching strain speed (stretching speed/length in the stretching direction) dependency of the maximum stretching ratio. The size of the film sample was 30 mm (length in the stretching direction)×400 mm (width), and the flattening press was conducted as follows. The extruded film A is inserted between biaxially stretched polyester resin films and under initial pressure of 1,94 MPa (20 kg/$cm^2$), heated to 190°C to release air, and then it was pressed under molding pressure of 5,88 MPa (60 kg/$cm^2$) for 15 minutes and then cooled to 60°C while maintaining the pressure at 5,88 MPa (60 kg/$cm^2$).

As a result, the temperature dependency of the maximum stretching ratio at a stretching strain speed of 10 mm/mm · minute was as shown in the following Table 1.

TABLE 1

| Stretching temperature (°C) | Maximum stretching ratio (times) | |
|---|---|---|
| | Extruded film A | Pressed film A |
| 210—220 | 1.5 | 1.8 |
| 175 | 1.7 | 2.0 |
| 75 | 4 | 5 |
| 70 | 8.5 | 10 |
| 65 | 9 | 10.2 |
| 60 | 7.5 | 10 |
| 50 | 5 | 6.5 |
| 40 | 4.2 | 4.8 |
| 25 | 2.7 | 3.2 |

Further, the stretching strain speed dependency of the maximum stretching ratio at a stretching temperature of 65°C was as shown in the following Table 2.

TABLE 2

| Stretching strain speed (mm/mm · minute) | Maximum stretching ratio (times) | |
|---|---|---|
| | Extruded film A | Pressed film A |
| 2 | 9 | 10.3 |
| 10 | 9 | 10.2 |
| 30 | 8 | 7.5 |
| 40 | 6 | 6 |

Example 2

An extruded film A (size: 100 mm×100 mm) having the same thickness of 280 μm as in Example 1 was subjected to simultaneous biaxial stretching by means of a stretching tester at a stretching temperature of 65°C and at a stretching strain speed of 10 mm/mm · minute. The stretching ratios in both directions were 2.5 times (6.25 times in the surface area), and the membrane thereby obtained had a thickness of not more than 50 μm.

Example 3

A continuously extruded film A having a width of 1.3 m and the same thickness of 280 μm as in Example 1 was stretched by means of a continuous uniaxial stretching machine at a stretching roll temperature of 65°C, at a stretching roll speed of 20 cm/minute and at a stretching strain speed of 10 mm/mm · minute. The membrane obtained at a stretching ratio of 2.2 times had a thickness of about 140 μm, and the membrane width was reduced to about 1.2 m.

Example 4

To a copolymer of tetrafluoroethylene and $CF_2=CFO(CF_2)_3COOCH_3$ having an ion exchange capacity of 1.8 meq/g and $T_Q$ of 207°C, 6% by weight of PTFE fine powder was added, and the mixture was kneaded at a speed of 5 kg/hr by means of a counter-rotating twin screw shaft extruder provided with screws having a diameter of 32 mm and set at a cylinder kneading portion temperature of 130°C and a pelletizing die temperature of 200°C, whereby the PTFE fine powder was uniformly dispersed and fibrillated. The mixture was extruded at a molding temperature of 240°C to obtain an extruded film B having a thickness of 280 μm. This extruded film B was pressed for flattening by a roll press method to obtain a pressed film B. The roll pressing was conducted as follows. The extruded film B was inserted between heat resistant films made of a biaxially stretched polyester resin film, and the tension of the upper and lower heat resistant films was set at 500 g/cm and the tension of the extruded film B was set at 150 g/cm, whereas the surface temperature of a metal heating roll was set at 220°C and the surface temperature of a rubber press roll was set at 150°C. The membrane thus inserted between the heat resistant films was pressed between the two rolls under pressure of 40 kg/cm$^2$. The peripheral speed of the metal roll was set at 20 cm/minute and the speed of the withdrawing nip rolls was adjusted so that the tension of the three layer sheets of heat resistant film/membrane/heat resistant film after the pressing became to be 2 kg/cm.

The extruded film B and the pressed film B (each having a size of 30 mm (length in the tensile direction)×400 mm (width)) were stretched in the same direction as the direction of extrusion by means of a stretching tester at a stretching temperature of 40°C and at a stretching strain speed of 10 mm/mm · minute. The extruded film B and the pressed film B were stretched at stretching ratios of 2.2 and 2.5 times, respectively, whereby membranes having a thickness of 1140 μm and 125 μm were obtained, respectively.

Example 5

On a continuously extruded film B having a width of 1.3 m and the same thickness of 280 μm as in Example 4, a continuously extruded film C having a width of 1.3 m and a thickness of 30 μm prepared by extruding a copolymer of tetrafluoroethylene and $CF_2=CFO(CF_2)_3COOCH_3$ having an ion exchange capacity of 1.25 meq/g and $T_Q$ of 220°C without addition of PTFE fine powder at a molding temperature of 220°C, was laminated by a roll pressing method to obtain a laminated film C.

The roll pressing was conducted as follows.

The extruded film C was adhered to a biaxially stretched polyester resin film taking the advantage of the adhesiveness of this polymer.

The extruded film B was inserted between a heat resistant film made of a biaxially stretched polyester resin film and a heat resistant film made of a biaxially stretched polyester film having the extruded film C adhered inside thereof. The tension of the biaxially stretched polyester resin single film was set at 500 g/cm, the tension of the biaxially stretched polyester film having the extruded film C adhered thereto was set at 50 g/cm and the tension of the extruded film B was set at 150 g/cm, whereas the surface temperature of a metal heating roll was set at 220°C and the surface temperature of a rubber press roll was set at 150°C. The laminated sheet was pressed between the two rolls under pressure of 40 kg/cm$^2$.

The peripheral speed of the two rolls was set at 25 cm/minute and the speed of the withdrawing nip rolls was adjusted so that the tension of the four layer sheet of heat resistant film/ion exchange membrane/ion exchange membrane/heat resistant film became 2 kg/cm after the pressing.

The laminated film C having a width of 1.3 m and a thickness of 310 μm thereby obtained was stretched by means of a continuous mono-axial stretching machine at a stretching roll temperature of 40°C, at a stretching roll speed of 20 cm/minute and at a stretching strain speed of 10 mm/mm · minute. The thickness of the membrane obtained at a stretching ratio of 2.2 times was 165 μm and the membrane width was reduced to about 1.2 m. The cross section of the membrane was observed by a polarizing microscope, whereby the thickness of the extruded film B and extruded film C after the lamination pressing was found to be 140 μm and 15 μm, respectively.

Example 6 and Comparative Example 1

In the same manner as in Example 1, the extruded film A and the pressed film A were uniaxially stretched at a stretching ratio of 2 times and 5 times, at a stretching temperature of 65°C and at a stretching strain speed of 10 mm/mm · minute. The stretched membrane thus obtained from the extruded film A was roll pressed at a temperature of 225°C under pressure of 3,92 MPa (40 kg/cm$^2$) and at a speed of 20 cm/minute for flattening and annealing. Whereas the stretched membrane obtained from the pressed film A was roll pressed at a temperature of 170°C under pressure of 2,94 MPa (30 kg/cm$^2$) and at a speed of 20 cm/minute for annealing. The mechanical strength and the dimensional stability of the membranes thereby obtained were measured, and the results thereby obtained are shown in Table 3 and 4. The dimensional stability was measured in the following manner. Namely, the sample membrane was immersed in a 25% sodium hydroxide aqueous solution maintained at 90°C for 16 hours for hydrolysis, and after taking it out from the solution, the dimensions in the direction of extrusion and the perpendicular direction were immediately measured at room temperature. Further, the sample membrane was immersed in a 12% sodium hydroxide aqueous solution maintained at 90°C for 40 hours, and after taking it out from the solution, its dimensions were measured in the same manner at room temperature. The change in the dimensions during this period was shown by percentage based on the dimensions after the immersion in the 25% sodium hydroxide aqueous solution. Furthermore, for the purpose of comparison, similar measurements were conducted with respect to a roll pressed membrane of the extruded film A which was not subjected to stretching treatment and a membrane obtained by roll pressing an extruded film A containing no PTFE fibrils without stretching. The results thereby obtained are shown in Tables 3 and 4.

TABLE 3

| | Tear strength (981 N/m= kg/cm) [ASTM D-689] | Tensile elongation (%) | | Tensile breaking strength (9.81 MPa =kg/mm$^2$) | |
|---|---|---|---|---|---|
| | | Direction of extrusion | Perpendicular direction | Direction of extrusion | Perpendicular direction |
| Extruded film A | | | | | |
| 2 times stretched (thickness 150 μm) | 6.4 | 81 | 78 | 3.6 | 3.2 |
| 5 times stretched (thickness 70 μm) | 5.5 | 65 | 59 | 3.2 | 3.0 |
| Pressed film A | | | | | |
| 2 times stretched (thickness 150 μm) | 6.5 | 83 | 75 | 3.5 | 3.2 |
| 5 times stretched (thickness 70 μm) | 5.4 | 70 | 62 | 3.3 | 3.0 |
| Comparative Example | | | | | |
| No stretching (thickness 280 μm) | 6.5 | 86 | 79 | 3.6 | 3.2 |
| No addition of PTFE (thickness 200 μm) | 2.4 | 52 | 51 | 3.0 | 2.7 |

TABLE 4

| | Dimensional change (%) | |
|---|---|---|
| | Direction of extrusion | Perpendicular direction |
| Extruded film A<br>2 times stretched<br>(thickness 150 μm) | 3.0 | 5.3 |
| 5 times stretched<br>(thickness 70 μm) | 3.2 | 5.5 |
| Pressed film A<br>2 times stretched<br>(thickness 150 μm) | 2.2 | 6.4 |
| 5 times stretched<br>(thickness 70 μm) | 2.9 | 6.3 |
| Comparative Example<br>No stretching<br>(thickness 280 μm) | 2.9 | 6.1 |
| No addition of PTFE<br>(thickness 200 μm) | 5.5 | 6.0 |

Example 7

The extruded film A having a thickness of 280 μm obtained in Example 1 was uniaxially stretched at a stretching ratio of two times, at a stretching temperature of 65°C and at a stretching strain speed of 10 mm/mm · minute, and then roll-pressed for flattening at a temperature of 225°C under pressure of 40 kg/cm$^2$ and at a speed of 20 cm/minute to obtain a membrane having a thickness of 150 μm. The membrane was immersed in a 25% NaOH aqueous solution at 90°C for 16 hours for hydrolysis. The membrane was then set in an electrolytic cell having a $RuO_2/TiO_2$ anode having an effective surface area of 25 cm$^2$ and a low overvoltage cathode, and electrolysis was conducted at 90°C at 20 A/dm$^2$. While maintaining the brine concentration at the anode side to be NaCl 3.5N and supplying water to the anode side, the concentration of the forming NaOH was maintained at a level of 35%. Fifteen days later, the cell voltage of the electrolytic cell was 3.15 V and the current efficiency was 94%, and thereafter a constant electrolytic operation was continued for 60 days. Then, the operation was stopped, and the membrane was examined, whereby no abnormality was observed and the creases formed by the dimensional change of the ion exchange membrane during the electrolysis were minimum, thus indicating no problems for practical use.

Example 8

The extruded film B having a thickness of 280 μm obtained in Example 4 was uniaxially stretched at a stretching ratio of 2.2 times, at a stretching temperature of 40°C and at a stretching strain speed of 10 mm/mm · minute, and then an extruded film C made of a copolymer of tetrafluoroethylene and $CF_2{=}CFO(CF_2)_3COOH$ having an ion exchange capacity of 1.25 meq/g and $T_Q$ of 220°C containing no PTFE fine powder and having a thickness of 30 μm was laminated thereon by a roll pressing method at a temperature of 225°C under pressure of 40 kg/cm$^2$ and at a speed of 25 cm/minute to obtain a laminated film D having a thickness of 170 μm. This film was processed by a roll pressing method to continuously transferring a porous thin layer onto its surface. The roll pressing was conducted in the following manner.

The laminated film D was sandwiched between two heat resistant films provided on their surfaces with a porous thin layer, i.e. a biaxially stretched polyester resin film having on its surface a porous layer composed of SiC particles having a particle size of from 3 to 9 μm coated in an amount of 10±2 g per m$^2$ and a biaxially stretched polyester resin film having on its surface a porous layer composed of $TiO_2$ particles having a particle size of from 2 to 10 μm coated in an amount of 10±2 g, so that the SiC layer was located at the extruded film C side and the $TiO_2$ layer was located at the extruded film B side. The tension of the heat resistant film was set at 500 g/cm and the tension of the laminated film B was set at 150 g/cm, whereas the surface temperature of a metal heating roll was set at 170°C and the surface temperature of a rubber press roll was set at 130°C. The assembled sheet was pressed between the two rolls under the pressure of 2,94 MPa (30 kg/cm$^2$).

The peripheral speed of the two rolls was set at 20 cm/minute and the speed of withdrawing nip rolls was adjusted so that the tension of the heat resistant film/ion exchange membrane/heat resistant film after

the pressing became to be 2 kg/cm. By the above operation, the porous layers of $TiO_2$ and SiC formed on the heat resistant films were transferred onto the respective surfaces of the ion exchange membrane and satisfactorily bonded thereto due to the melting of the ion exchange membrane.

The membrane was immersed in a 25% NaOH aqueous solution at 90°C for 16 hours for hydrolysis, and then set in an electrolytic cell having a $RuO_2/TiO_2$ anode having an effective surface area of 25 $cm^2$ and a low overvoltage cathode. Electrolysis was conducted at a temperature of 90°C at 20 $A/cm^2$. While maintaining the concentration of brine at the anode side to be NaCl 3.5N and supplying water to the cathode side, the concentration of the forming NaOH was maintained at a level of 35%. Fifteen days layer, the cell voltage of the electrolytic cell was 2.90 V and the current efficiency -was 94%, and thereafter, constant operation was continued for 60 days. Then, the operation was stopped and the membrane was examined, whereby no abnormality was observed and the creases formed by the dimensional change of the ion exchange membrane were minimum.

**Claims**

1. A process for producing an ion exchange membrane comprising a fluorinated ion exchange resin containing uniformly dispersed fluoropolymer fibrils, characterized in that a film of said fluorinated ion exchange resin containing said fluoropolymer fibrils is stretched at a temperature lower by from 50 to 250°C than $T_Q$ of the fluorinated ion exchange resin, where $T_Q$ is a temperature at which the fluorinated ion exchange resin has a volumetric flow rate of 100 $mm^3$/sec under a pressure of 2,94 MPa (30 $kg/cm^2$), when melt-extruding the polymer through a nozzle having a diameter of 1 mm and a length of 2 mm.

2. The process according to claim 1, wherein the fluorinated ion exchange resin is a fluorinated ion exchange resin having carboxylic acid groups and/or sulfonic acid groups.

3. The process according to one of claims 1 or 2, wherein the fluorinated ion exchange resin contains the fluoropolymer fibrils in an amount of 0.2 to 20% by weight based on the total weight of the fluorinated ion exchange resin and the fluoropolymer fibrils.

**Patentansprüche**

1. Verfahren zur Herstellung einer Ionenaustauschmembran, umfassend ein fluoriertes Ionenaustauscherharz, enthaltend einförmig dispergierte Fluorpolymer-Fibrillen, dadurch gekennzeichnet, daß man einen Film aus dem fluorierten Ionenaustauscherharz, enthaltend die Fluorpolymer-Fibrillen, bei einer Temperatur reckt, welche um 50 bis 250°C niedriger ist als $T_Q$ des fluorierten Ionenaustauscherharzes, wobei $T_Q$ eine Temperatur ist, bei der das fluorierte Ionenaustauscherharz eine volumetrische Fließrate von 100 $mm^3$/s unter einem Druck von 2,94 MPa (30 $kg/cm^2$) aufweist, wenn man das Polymere durch eine Düse mit einem Durchmesser von 1 mm und einer Länge von 2 mm schmelzextrudiert.

2. Verfahren nach Anspruch 1, wobei das fluorierte Ionenaustauscherharz ein fluoriertes Ionenaustauscherharz mit Carbonsäuregruppen und/oder Sulfonsäuregruppen ist.

3. Verfahren nach einem der Ansprüche 1 oder 2, wobei das fluorierte Ionenaustauscherharz die Fluorpolymer-Fibrillen in einer Menge von 0,2 bis 20 Gew.-%, bezogen auf das Gesamtgewicht des fluorierten Ionenaustauscherharzes und der Fluorpolymer-Fibrillen enthält.

**Revendications**

1. Procédé pour produire une membrane échangeuse d'ions constituée d'une résine échangeuse d'ions fluorée qui contient des fibrilles de fluoropolymère uniformément dispersées, caractérisé en ce qu'un film, formé à partir de ladite résine échangeuse d'ions fluorée qui contient lesdites fibrilles de fluoropolymère, est étiré sous une température inférieure, de 50 à 250°C, au $T_Q$ de la résine échangeuse d'ions fluorée, $T_Q$ étant une température à laquelle la résine échangeuse d'ions fluorée possède une vitesse d'écoulement volumétrique de 100 $mm^3$/s sous une pression de 2,94 MPa (30 $kg/cm^2$), lors de l'extrusion du polymère en fusion à travers un orifice de fillère présentant un diamètre de 1 mm et une longueur de 2 mm.

2. Procédé selon la revendication 1, selon lequel la résine échangeuse d'ions fluorée est une résine échangeuse d'ions fluorée renfermant des groupes acide carboxylique et/ou des groupes acide sulfonique.

3. Procédé selon l'une des revendications 1 ou 2, selon lequel la résine échangeuse d'ions fluorée contient des fibrilles de fluoropolymère dans une proportion de 0,2 à 20% en poids, calculée par rapport au poids total de la résine échangeusè d'ions fluorés et des fibrilles de fluoropolymère.